# EUROPEAN PATENT APPLICATION

(11) **EP 1 470 952 A1**
(43) Date of publication of application: **27.10.2004**
(21) Application number: 04076222.1
(22) Date of filing: 22.04.2004
(51) Int. Cl.: B60N 2/28

(54) **Infant vehicle seat**

(30) Priority: 25.04.2003 NL 1023274
(71) Applicant: Maxi Miliaan B.V., NL-5705 DG Helmond (NL)
(72) Inventor: Siewertsen, Adriaan, 5961 MD Son & Breugel (NL); van Driel, Roelof, 5611 PX Eindhoven (NL)
(74) Representative: Valkonet, Rutger

(57) **Abstract**

An infant vehicle seat comprising a frame to be mounted to a vehicle seat and a back support that can pivot with respect to said frame, which vehicle seat comprises a seat portion and a back portion. In use, a lower side of the back support of the infant vehicle seat positioned near the frame is movable with respect to the frame in directions away from and towards the vehicle back portion, the back support being upright in a first position. The back support is freely pivotable at least through an adjusting angle with respect to the frame, with an upper side of the back support remote from the frame abutting against the vehicle back portion in use.

## Description

The invention relates to an infant vehicle seat comprising a frame to be mounted to a vehicle seat, a seat portion and a back support that can pivot with respect to said frame, which vehicle seat comprises a seat portion and a back portion, wherein a lower side of the back support of the infant vehicle seat positioned near the frame is movable with respect to the frame in use in directions away from and towards the vehicle back portion, the back support being upright in a first position, in which in the lower side of the back support is disposed near the vehicle back portion, and being reclined in a second position, in which the lower side of the back support is spaced from the vehicle back portion.

With such an infant vehicle seat known from British patent application GB-A-2,116,837, the back support can be pivoted by means of adjusting wheels between an upright position and a reclined position. These are the positions that correspond to the positions of an infant present in the infant vehicle seat. Furthermore, a lower side of the back support near the frame can be moved independently of the angular position of the back support in directions away from and towards the vehicle back portion.

A situation is conceivable, therefore, in which the lower side of the back support is removed from the vehicle back portion by a relatively large distance whilst at the same time also the upper side of the back support remote from the frame is removed from the vehicle back portion by a relatively large distance. In such a position an infant present in the infant vehicle seat in the vehicle will be positioned relatively close to another vehicle seat present in front of the infant vehicle seat or near a dashboard. This is undesirable, because this means that there is a risk of the infant coming into contact with the vehicle seat in question or with a dashboard in case of a collision.

The object of the invention is to provide an infant vehicle seat in which the back support can be pivoted between an upright position and a reclined position in a relatively simple manner whilst avoiding the drawbacks of the prior art infant vehicle seat.

This object is achieved with the infant vehicle seat according to the invention in that the frame comprises a first part to be mounted to the vehicle seat and a second part that is adjustably connected thereto, wherein the seat portion can be detachably and adjustably connected to the second part of the frame, whilst the back support is connected to the seat portion in such a manner as to be freely pivotable at least through an adjusting angle, with an upper side of the back support remote from the frame abutting against the vehicle back portion in use.

After the first part has been mounted to the vehicle seat, the second part can be positioned as close to the vehicle back portion as possible, so that a solid connection to the vehicle seat is obtained. After the frame has been correctly connected to the vehicle seat, the seat portion and the back support, which is pivotally connected thereto, can be mounted to the second part. By subsequently adjusting the seat portion with respect to the second part of the frame, the back support connected to the seat portion will automatically pivot with respect to the seat portion as a result of the back support being freely pivotable with respect to the seat portion, with the weight of the back support holding the upper side of the back support in abutment with the vehicle back portion. In this way no separate means are required to enable pivoting of the back support, whilst in addition the back support is positioned as close to the vehicle back portion as possible.

The adjusting angle must be large enough to allow pivoting of the back support at least between the upright position and the reclined position.

It is noted that from DE-C1-196.46.621 there is known an infant vehicle seat in which the seat portion is connected to the vehicle by means of a telescopic rod. Since said telescopic rod functions both to connect the infant vehicle seat to the vehicle and to adjust the position of the seat portion with respect to the vehicle seat, neither a satisfactory and easy adjustability nor an adequate and optimum fixation of the infant vehicle seat to the vehicle seat is obtained. With the infant vehicle seat according to the invention, the second part is adjustable with respect to the first part that is connected to the vehicle seat, so that an adequate fixation of the first part to the vehicle as well as an optimum position of the second part with respect to the first part can be ensured. In addition to that, the seat portion is independently adjustable with respect to the first part, without the adjustment of the first part with respect to the second part being changed thereby.

One embodiment of the infant vehicle seat according to the invention is characterized in that the seat portion and the frame are adjustable in a number of discrete positions with respect to each other.

Such discrete positions can be realised in a relatively simple manner, whilst a desired number of positions of the back support connected to the seat portion can nevertheless be realised. In practice it has become apparent that a user, in addition to the upright position and the reclining position, usually appreciates being transported in one or two other positions of the back support. Realising a number of discrete positions is considerably easier than arranging for the seat portion to be continuously adjustable with respect to the frame, as is the case with the infant vehicle seat according to the British patent application GB-A-2,116,837 as described above.

The invention will be explained in more detail hereinafter with reference to the drawings, in which:
Figs. 1A and 1B are a side elevation and a perspective view of a frame of an infant vehicle seat according to the invention;
Figs. 2A-2C are side elevations showing the manner in which the frame as shown in Figs. 1A-1B is mounted to a vehicle seat;
Figs. 3A and 3B are side elevations showing the manner in which a seat portion and a back support pivotally connected thereto are connected to a frame;
Figs. 4A and 4B are side elevations showing the manner in which the position of the back support of the infant vehicle seat that is shown in Figs. 3A-3B is changed;
Fig. 5 shows an alternative manner of mounting the frame as shown in Figs. 1A-1B;
Figs. 6A and 6B a side elevation and a perspective view of an alternative embodiment of the frame that is shown in Figs. 1A-1B.

Like parts are indicated by the same numerals in the various figures.

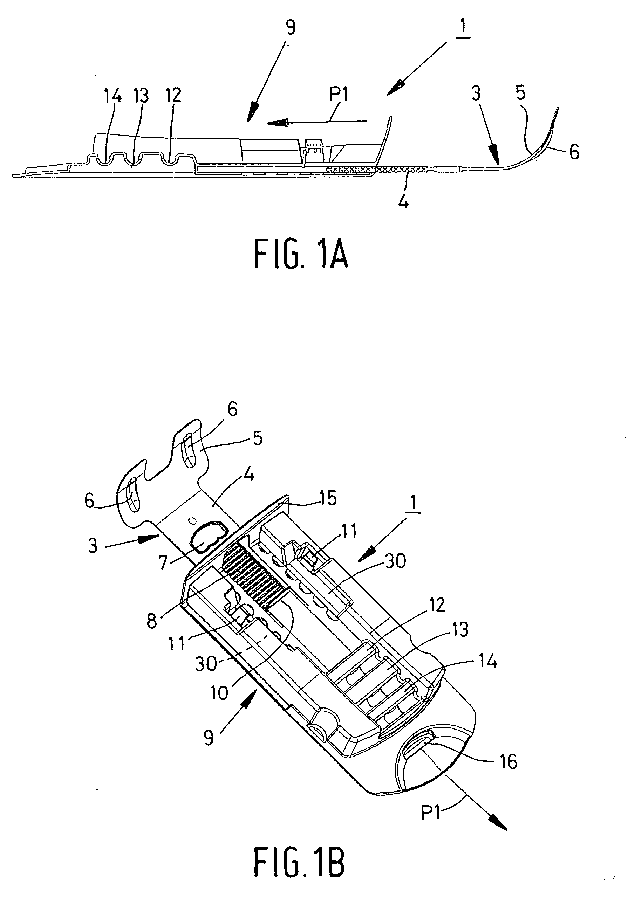

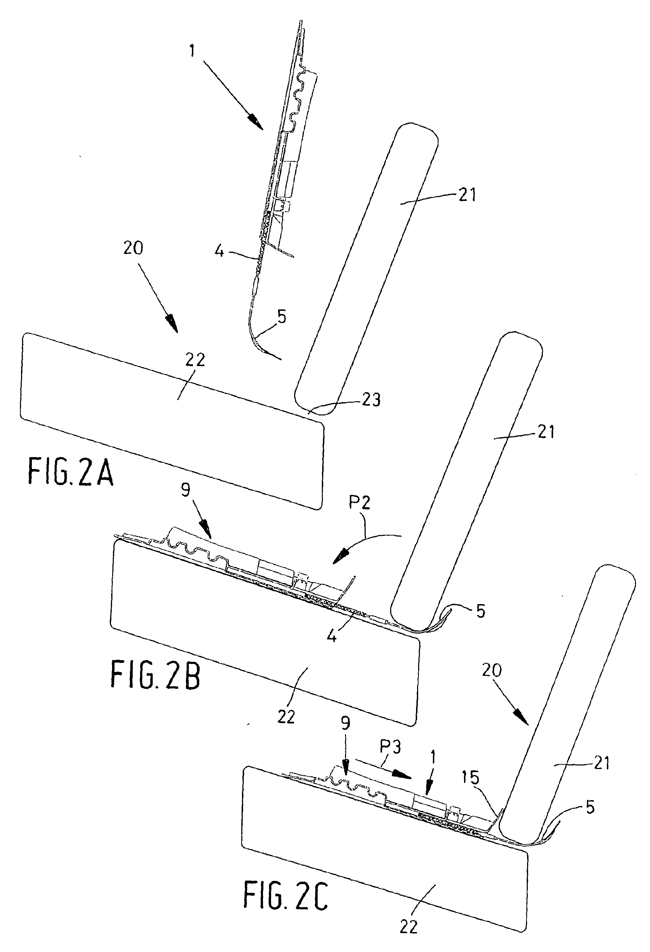

Figs. 1A and 1B show a frame 1 of an infant vehicle seat 2 according to the invention, which frame 1 comprises a first part 3 including an elongated plate 4 and a hook-shaped element 5 connected thereto. The hook-shaped element 5 comprises two stiffened portions 6. The plate 4 is provided with an opening 7, which functions as a handle for mounting the frame 1 to a vehicle seat, as will be explained in more detail yet with reference to Figs. 2A-2C. On a side remote from the hook-shaped element 5, the plate 4 is provided with a number of ribs 8 extending transversely to the longitudinal direction of the plate 4 as indicated by the arrow P1. The ribs 8 are present both at the upper side and at the bottom side of the plate 4. The frame 1 further comprises a second part 9, which is movable with respect to the plate 4 in the direction indicated by the arrow P1 and in the opposite direction. The second part 9 can be interlocked with the first part 3 by means of a lip 10 that engages in one of the ribs 8 under spring force. The springing lip 10 can be moved out of engagement with the rib 8 in the plate 4 against spring force by means of an operating knob 16.

The second part 9 is furthermore provided with cams 11 disposed opposite each other, which can be moved against spring force, and with slots 12, 13, 14 extending transversely to the direction indicated by the arrow P1, which slots are spaced from the cams 11 by some distance. The second part 9 is provided with an upright edge 15 on a side of the cams 11 remote from the slots 12, 13, 14.

As is shown in Figs. 2A-2C, the frame 1 can be mounted in a simple manner to a vehicle seat 20 comprising a back portion 21 and a seat portion 22, and a relatively narrow gap 23 is present or can be formed between the back portion 21 and the seat portion 22 of the vehicle seat. To connect the frame 1 to the vehicle seat 20, the plate 4 is taken hold of via the opening 7 and moved to a substantially vertical position (see Fig. 2A). Then the hook-shaped element 5 is moved into the gap 23, after which the plate 4 is pivoted in a direction indicated by the arrow P2, in such a manner that the plate 4 will extend parallel to the vehicle seat portion 22. The hook-shaped element 5 is positioned on a side of the vehicle back portion 21 remote from the second part 9 (Fig. 2B).

Subsequently, the second part 9 is moved in the direction indicated by the arrow P3, which is the opposite direction of the arrow P1, towards the vehicle back portion 21 until the upright edge 15 abuts against the vehicle back portion 21. The frame 1 is now firmly connected to the vehicle seat 20. The part 3 can be held in position via the opening 7 while the part 9 is being moved.

Besides the frame 1, the infant vehicle seat 2 comprises a seat portion 25 and a back support 27 which is pivot-mounted to the seat portion 25 by means of a pivot pin 26, being pivotable in the direction indicated by the arrow P4 and in the opposite direction. The seat portion 25 is provided with pins 28 on a side facing towards the frame 1. The seat portion 25 further comprises a projection 29 facing towards the frame 1, which can be moved into engagement with one of the slots 12, 13, 14.

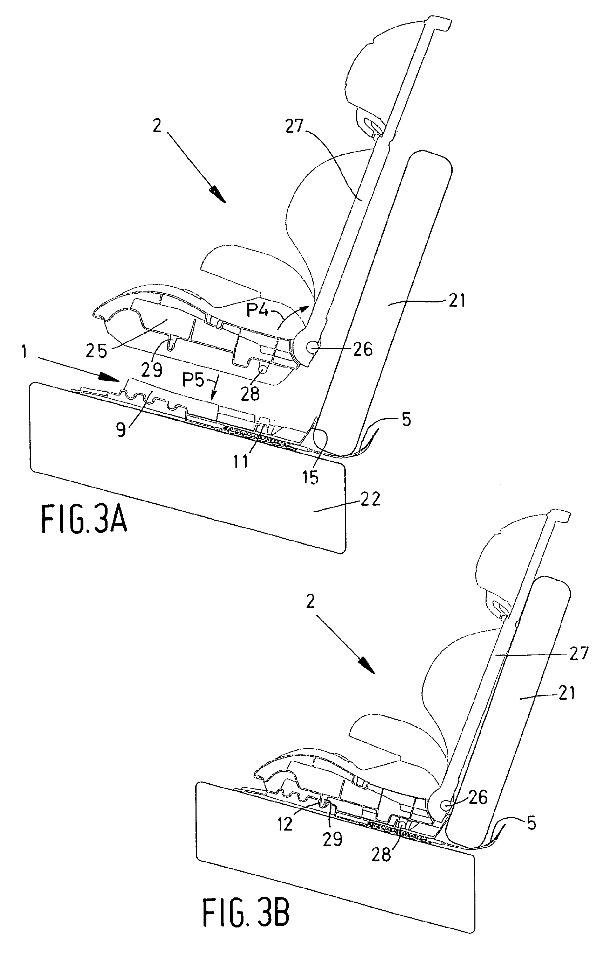

By moving the seat portion 25 in the direction indicated by the arrow P5, the pins 28 are moved into engagement with the frame 1 against the spring force of the cams 11, after which the pins 28 are slidably accommodated in slots 30 (see Fig. 1B) in the second part 9 and the projection 29 comes into engagement with the slots 12, as a result of which the seat portion 25 is firmly connected to the frame 1 (Fig. 3 B).

In the position that is shown in Fig. 3B, the back support 27 extends substantially parallel to the vehicle back portion 21 in an upright position, in which a infant present in the infant seat 2 sits up straight.

To adjust the position of the back support 27, a side of the seat portion 25 remote from the pivot pin 26 is taken hold of and tilted about the pins 28 in the direction indicated by the arrow P6, whilst at the same time the pins 28 are moved through the slots 30 in the direction indicated by the arrow P7. An upper side 31 of the back support 27 remote from the frame 1 remains in abutment with the vehicle back portion 21, so that movement of the seat portion 25 automatically results in pivoting of the back support 27 about the pivot pin 26 in the direction indicated by the arrow P4. Subsequently, the seat portion 25 is tilted in the opposite direction of the arrow P6, until the projection 29 engages in the slot 14 in the frame 1. In this way a relatively simple adjustment of the position of the back support is realised.

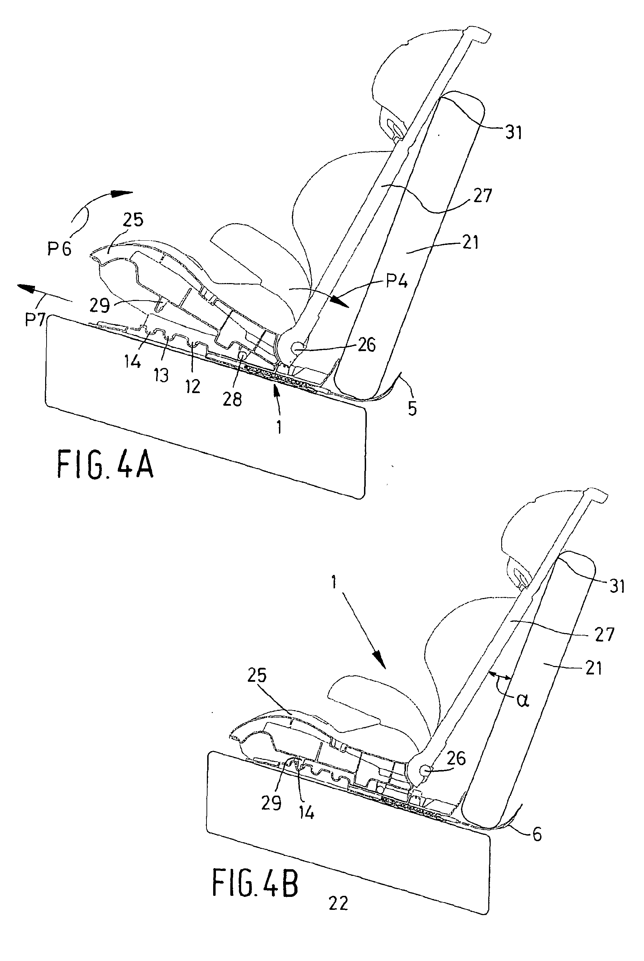

The infant seat 1 is now in the position that is shown in Fig. 4B, in which the back support includes an angle α with the vehicle back portion 21. The posture of an infant present in the infant seat 1 is now slightly reclined and the back support 27 is in a reclined position. By moving the projection 29 into engagement with the slot 13 disposed between the slots 12 and 14, it is possible to move the back support 27 to a position in which it includes an angle with the vehicle back portion 21 that is smaller than the angle α but larger than the angle between the vehicle back portion 21 and the back support 27 in Fig. 3 B.

The back support 27 must be freely pivotable about the pivot pin 26 at least through an angle large enough to allow movement of the back support from the upright position to the reclined position.

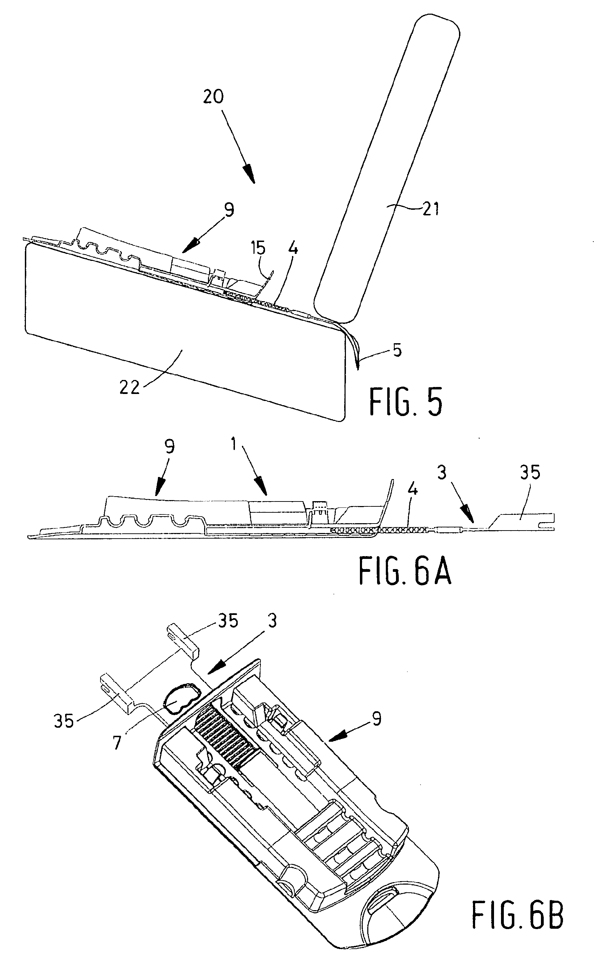

Fig. 5 shows the frame 1 that is shown in Fig. 1A and 1B, in which the first part 3 is inserted into the second part 9 in such a manner that the hook-shaped element 5 extends in downward direction. In this way it is possible to mount the frame 1 to the vehicle seat in the manner that is shown in Fig. 5, in which the hook-shaped element 5 engages behind the vehicle seat portion 22 of the vehicle seat 20, in situations in which the manner of mounting the frame 1 that is shown in Figs. 2A-2C cannot be used with the vehicle seat in question.

Instead of using the hook-shaped element 5, it is also possible to provide the first part 3 with so-called isofix connecting elements 35, which are detachably connected to brackets (not shown) present in the vehicle, which are fixed in the vehicle at a rear side of the vehicle seat, near the gap 23. The isofix connecting elements may be flexibly or rigidly connected to the plate 4. Using such connecting elements, which are known per se, a solid connection between the frame 1 and the vehicle is realised.

It is also possible to connect the pivot pin 26 directly to the frame 1, in which case the pivot pin 26 is movable in the frame.

It is also possible to connect the frame 1 to the vehicle seat portion 22 e.g. by means of Velcro, a tensioning strap or other fastening means, thus preventing undesirable movement of the frame.

When the infant vehicle seat is to be removed from the vehicle, the seat portion and the back support of the second part of the frame are disconnected first, after which the frame is removed.

## Claims

1. An infant vehicle seat (2) comprising a frame (1) to be mounted to a vehicle seat (20), a seat portion (25) and a back support (27) that can pivot with respect to said frame (1), which vehicle seat (20) comprises a seat portion (22) and a back portion (21), wherein a lower side of the back support (27) of the infant vehicle seat (2) positioned near the frame (1) is movable with respect to the frame (1) in use in directions away from and towards the vehicle back portion (21), the back support (27) being upright in a first position, in which in the lower side of the back support (27) is disposed near the vehicle back portion (21), and being reclined in a second position, in which the lower side of the back support (27) is spaced from the vehicle back portion (21), **characterized in that** the frame (1) comprises a first part (3) to be mounted to the vehicle seat (20) and a second part (9) that is adjustably connected thereto, wherein the seat portion (25) can be detachably and adjustably connected to the second part (9) of the frame (1), whilst the back support (27) is connected to the seat portion (25) in such a manner as to be freely pivotable at least through an adjusting angle (α), with an upper side (31) of the back support (27) remote from the frame (1) abutting against the vehicle back portion (21) in use.

2. An infant vehicle seat (2) according to claim 1, **characterized in that** the seat portion (25) and the frame (1) are adjustable in a number of discrete positions with respect to each other.

3. An infant vehicle seat (2) according to claim 1 or 2, **characterized in that** the second part (9) abuts against the vehicle back portion (21) with one side (15) in use.

4. An infant vehicle seat (2) according to any one of the preceding claims, **characterized in that** the frame (1) is provided with a hook-shaped element (5), which can be detachably fitted between the back portion (21) and the seat portion (22) of the vehicle seat (20).

5. A infant vehicle seat (2) according to any one of the preceding claims 1 - 5, **characterized in that** the frame (1) is provided with a connecting element (35), which can be detachably connected to a bracket disposed between the back portion (21) and the seat portion (22) of the vehicle seat (20).
